# EUROPÄISCHE PATENTSCHRIFT

(11) **EP 1 125 248 B1**
(45) Veröffentlichungstag und Bekanntmachung des Hinweises auf die Patenterteilung: **14.08.2002**
(21) Anmeldenummer: 99957937.8
(22) Anmeldetag: 28.10.1999
(51) Int. Cl.: G06K 19/077

(54) **IDENTIFIKATIONSLABEL SOWIE VERFAHREN ZUR HERSTELLUNG EINES IDENTIFIKATIONSLABELS**
IDENTIFICATION LABEL AND PROCESS FOR PRODUCING AN IDENTIFICATION LABEL
ETIQUETTE D'IDENTIFICATION ET PROCEDE DE FABRICATION D'UNE ETIQUETTE D'IDENTIFICATION

(30) Priorität: 02.11.1998 DE 19850353
(43) Veröffentlichungstag der Anmeldung: 22.08.2001
(73) Patentinhaber: Finn, David, 87629 Füssen-Weissensee (DE); Rietzler, Manfred, 87616 Marktoberdorf (DE)
(72) Erfinder: Finn, David, 87629 Füssen-Weissensee (DE); Rietzler, Manfred, 87616 Marktoberdorf (DE)
(74) Vertreter: Tappe, Hartmut
(86) Internationale Anmeldenummer: DE9903448
(87) Internationale Veröffentlichungsnummer: WO0026855

(56) Entgegenhaltungen:
- EP-A- 0 595 549
- WO-A-92/17866
- GB-A- 2 318 545

## Beschreibung

Die vorliegende Erfindung betrifft ein Identifikationslabel mit Transpondereinheit zur Oberflächenbefestigung auf oder zur Umbefestigung an einem Gegenstand aufweisend einen mehrschichtigen Lagenaufbau mit einer Identifikationslage zur optischen Kennzeichnung, einer Verstärkungslage zur mechanischen Stabilisierung der Identifikationslage und einer Adhäsionslage zur Befestigung des Identifikationslabels am Gegenstand. Des weiteren betrifft die Erfindung ein Verfahren zur Herstellung eines derartigen Identifikationslabels sowie darüber hinaus eine Basiseinheit für die Herstellung des Identifikationslabels.

Identifikationslabel der eingangs genannten Art werden in der Regel als sogenannte "selbstklebende Label" ausgeführt zur Kennzeichnung von Gegenständen verwendet. Ein besonders weites Einsatzgebiet liegt im Bereich der Gepäckstückidentifikation von Luftfrachtstücken. Hierbei werden Labels verwendet, die im applizierten Zustand einen im wesentlichen dreilagigen Aufbau aufweisen, nämlich eine zur eigentlichen Identifikation des betreffenden Gepäckstücks sichtbar nach außen gerichtete Identifikationslage, die mit einer optischen Kennzeichnung versehen ist, eine Verstärkungslage, die als Trägerlage für die Identifikationslage und zu deren mechanischer Stabilisierung dient, sowie schließlich eine Adhäsionslage, die in Kontakt mit der Oberfläche des betreffenden Gepäckstücks eine Klebebefestigung am Gepäckstück ermöglicht.

Der besondere Vorteil der bekannten Identifikationslabels besteht in ihrer flexiblen Beschaffenheit, die eine Applikation der Labels nicht nur an ebenen Oberflächen, sondern auch an stark gekrümmten Oberflächen, wie beispielsweise Handgriffen von Gepäckstücken, ermöglicht.

Um neben einer optischen Kennzeichnung auf der äußeren Identifikationslage des Identifikationslabels mittels sogenannter "Bar-Codes" und alphanumerischer Kennzeichnungen auch über größere Distanzen eine berührungslose Identifizierung der mit den Identifikationslabels versehenen Gepäckstücke zu ermöglichen, ist es wünschenswert, die an sich bekannten Identifikationslabels mit sogenannten Transpondereinheiten zu kombinieren, die einen berührungslosen Zugriff auf in einer Chipeinheit der Transpondereinheit gespeicherte Informationen ermöglichen. Die Chipeinheit ist mit einer Antennenspule kontaktiert, mit der sie zusammen die Transpondereinheit bildet. Die Chipeinheit und die Antennenspule sind hierzu auf einem gemeinsamen Transpondersubstrat angeordnet. Versuche, eine solche Transpondereinheit mit einem an sich bekannten Identifikationslabel zu kombinieren, um insgesamt ein Identifikationslabel zu schaffen, das neben einer optischen Kennung auch eine elektronische Kennung ermöglicht, führten zu einem Gesamtlabelaufbau, bei dem ein herkömmliches Identifikationslabel mit einer auf dem Transpondersubstrat angeordneten Transpondereinheit ergänzt wird. Hierdurch wurde dem mehrschichtigen Lagenaufbau des herkömmlichen Identifikationslabels durch das Substrat der Transpondereinheit noch eine weitere Lage hinzugefügt. Durch diese Änderung des Gesamtlagenaufbaus des Identifikationslabels ergeben sich jedoch Nachteile hinsichtlich der Dicke und der Flexibilität des derart beschaffenen Identifikationslabels.

Aus der EP-A-0 595 549 ist ein Identifikationslabel mit Transponder und Beschriftung bekannt, wobei der auf einem Transpondersubstrat angeordnete Transponder mit einem konventionellen Identifikationslabel kombiniert ist.

Der Erfindung liegt daher die Aufgabe zugrunde, ein durch eine Transpondereinheit in seiner Funktionsweise verbessertes Identifikationslabel ohne nachteilige Veränderung des Lagenaufbaus des Identifikationslabels zu schaffen.

Diese Aufgabe wird durch ein Identifikationslabel mit den Merkmalen des Anspruchs 1 gelöst.

Bei dem erfindungsgemäßen Identifikationslabel dient die Verstärkungslage als Substrat zur Anordnung der Transpondereinheit. Durch die Verwendung der ohnehin bereits im Lagenaufbau eines herkömmlichen Identifikationslabels vorhandenen Verstärkungslage als Substrat zur Anordnung der Transpondereinheit wird die Funktionserweiterung eines Identifikationslabels um die durch die Transpondereinheit ermöglichte elektronische Kennung möglich, ohne den Lagenaufbau des Identifikationslabels zu ändern. Damit wird trotz der Integration einer Transpondereinheit in den Lagenaufbau die gerade für die Verwendung eines Identifikationslabels sprechende flexible und nahezu beliebige Applikation des Identifikationslabels auf Gegenständen nicht beeinträchtigt. Auf ein separates Substrat zur Anordnung der Transpondereinheit, das die mechanischen und geometrischen Eigenschaften des Lagenaufbaus des Identifikationslabels verändern würde, kann somit verzichtet werden.

Als besonders vorteilhaft erweist es sich, wenn die Transpondereinheit sich in einer zwischen der Verstärkungslage und der Adhäsionslage ausgebildeten Grenzschicht erstreckt, da somit, insbesondere in dem Fall, wenn die Transpondereinheit im wesentlichen oberflächig auf die Verstärkungslage aufgebracht ist, die Adhäsionslage zur nivellierenden Abdeckung der Transpondereinheit dient. Damit ist es möglich, insbesondere zur Erzeugung bzw. Applikation der Antennenspule der Transpondereinheit sowohl Verfahren zu verwenden, die zu einer eher in die Verstärkungslage eingebetteten Anordnung der Antennenspule führen als auch solche Verfahren, die eher zu einer Oberflächenapplikation der Antennenspule führen, wobei die jeweilige Wahl des Verfahrens zur Erzeugung bzw. zur Applikation der Antennenspule auch von der Materialbeschaffenheit der Verstärkungslage abhängig ist, also davon, ob die Verstärkungslage eine zumindest teilweise Einbettung der Antennenspule oder auch nur eine Oberflächenapplikation der Antennenspule ermöglicht.

Um eine andere Art der Befestigung des Identifikationslabels zu ermöglichen, kann die Adhäsionslage mit einer Passivierungslage abgedeckt und die Verstärkungslage mit einer Befestigungseinrichtung, z.B. einem Befestigungsband, zur Befestigung des Identifikationslabels am Gegenstand versehen sein.

Die der Erfindung zugrunde liegende Aufgabe wird auch durch eine Basiseinheit zur Herstellung eines Identifikationslabels mit den Merkmalen des Anspruchs 4 gelöst.

Die erfindungsgemäße Basiseinheit zur Herstellung eines Identifikationslabels zur Oberflächenbefestigung auf oder zur Umbefestigung an einem Gegenstand dient als Basis für den weiteren Lagenaufbau bei der Herstellung eines Identifikationslabels und umfaßt eine Verstärkungslage und eine Adhäsionslage, wobei die Verstärkungslage als Substrat zur Anordnung einer Tranpondereinheit in einer zwischen der Verstärkungslage und der Adhäsionslage ausgebildeten Grenzschicht dient.

Die erfindungsgemäße Basiseinheit ermöglicht die Bereitstellung eines Halbzeuges auf dem Wege zur Herstellung eines Identifikationslabels. Dabei ist dieses Halbzeug bereits mit einer Transpondereinheit versehen und weist einen Lagenaufbau auf, wie er auch Teil des Gesamtlagenaufbaus eines herkömmlichen Identifikationslabels ist. Ausgehend von der erfindungsgemäßen Basiseinheit können bei der Herstellung eines erfindungsgemäßen Identifikationslabels in unveränderter Weise die von der Herstellung herkömmlicher Identifikationslabel bekannten weiteren Herstellungsschritte bis zur Fertigstellung des Identifikationslabels erfolgen. Daher bietet die erfindungsgemäße Basiseinheit dem Hersteller von Identifikationslabels die vorteilhafte Möglichkeit, nach Einführung der Basiseinheit in sein Herstellungsverfahren zur Herstellung von Identifikationslabels sein Verfahren zur Bearbeitung und Aufbringung der äußeren Identifikationslage sowie sein übliches Verfahren zur Codierung der äußeren Identifikationslage unverändert beizubehalten.

Als besonders vorteilhaft für eine weitestgehend integrierte Anordnung der Transpondereinheit in die Verstärkungslage erweist es sich, wenn die Verstärkungslage mit einer Fensteröffnung für die zumindest anteilige Aufnahme einer Chipeinheit versehen ist und die Chipeinheit zur Ausbildung der Transpondereinheit mit einer Antennenspule aus Draht kontaktiert ist. Zum einen ermöglicht die Fensteröffnung eine weitestgehend versenkte Anordnung der Chipeinheit in der Verstärkungslage, zum anderen bietet die Beschaffenheit der Antennenspule aus Draht die Möglichkeit, auch die Antennenspule durch geeignete Druckeinwirkung zumindest anteilig in der Vertärkungslage versenkt anzuordnen. Hierdurch wird insgesamt der aus der Oberfläche der Verstärkungslage herausragende Anteil der Transpondereinheit klein gehalten, so daß bereits eine sehr dünnschichtige Ausbildung der Adhäsionslage ausreichend ist, um die Transpondereinheit nivelliert abzudecken.

Weitere Fensteröffnungen in der Verstärkungslage erweisen sich als vorteilhaft zur Kontaktierung der Kontaktenden der Antennenspule durch Zugriff auf Kontaktbereiche der Chipeinheit.

Auch erweist es sich als vorteilhaft, die Chipeinheit zumindest teilweise mit einer sich in der Ebene der Verstärkungslage erstreckenden Versteifungseinrichtung zu umgeben, um schädliche mechanische Belastungen während der Herstellung des Lagenaufbaus von der Chipeinheit fernzuhalten.

Je nach Materialbeschaffenheit der Vertärkungslage ist es jedoch auch möglich, die Antennenspule aus Draht auf der Oberfläche der Verstärkungslage anzuordnen und die Antennenspule durch eine eher dickschichtige Ausbildung der Adhäsionslage nivelliert abzudecken.

Um eine unbeabsichtigte Adhäsion der Adhäsionsfläche der Basiseinheit während der Bereithaltung der Basiseinheit zur weiteren Verwendung im Herstellungsverfahren zur Herstellung eines Identifikationslabels auszuschließen, besteht die Möglichkeit, die Adhäsionsfläche der Adhäsionslage mit einer Passivierungslage abzudecken. Diese Passivierungslage kann beispielsweise aus einer auf die Adhäsionsoberfläche aufgebrachten und von dieser leicht abziehbaren Silikonpapierlage gebildet sein.

Zumindest während der Bereitstellung der Basiseinheit für die nachfolgende Verwendung bei der Herstellung eines Identifikationslabels kann die Passivierungslage auch durch die freie Oberfläche der Verstärkungslage einer weiteren Basiseinheit gebildet sein. Eine derart ausgebildete Passivierungslage sorgt gleichzeitig für einen sicheren, temporären Stapelverbund einer Vielzahl von Basiseinheiten vor deren Vereinzelung und Verwendung beim Herstellungsverfahren zur Herstellung eines Identifikationslabels.

Eine weitere Lösung der der Erfindung zugrunde liegenden Aufgabe besteht darin, ein Verfahren gemäß Anspruch 12 durchzuführen, bei dem zunächst die Bereitstellung einer Basiseinheit nach einem oder mehreren der Ansprüche 4 bis 11 und nachfolgend die Aufbringung einer Identifikationslage auf die Basiseinheit erfolgt.

Das erfindungsgemäße Verfahren sieht demnach die Herstellung des Identifikationslabels basierend auf einer bereits zuvor hergestellten Basiseinheit vor, so daß der Hersteller von Identifikationslabels basierend auf der Basiseinheit in der Lage ist, ein Identifikationslabel herzustellen, das sowohl eine optische als auch eine elektronische Kennung ermöglicht, ohne daß sich für den Hersteller der Identifikationslabel der Herstellungsvorgang komplexer gestalten würde, als von der Herstellung herkömmlicher, lediglich eine optische Kennung ermöglichender Identifikationslabel bekannt ist.

Je nach Art der Beschaffenheit der Identifikationslage kann die Identifikationslage unmittelbar oder nach vorhergehender Aufbringung einer Zwischenlage als Trägerlage für die Identifikationslage auf die Basiseinheit aufgebracht werden. Als Trägerlage kann beispielsweise eine Papierlage verwendet werden.

Zur Herstellung einer Haftung zwischen der Basiseinheit und der Identifikationslage oder der Trägerlage kann eine Permanentkleberschicht auf die Basiseinheit, die Identifikationslage oder die Trägerlage aufgebracht werden. Statt der Permanentkleberschicht kann neben der ersten Adhäsionslage auch eine weitere Adhäsionslage vorgesehen werden.

Als besonders vorteilhaft erweist es sich, wenn in einem gemeinsamen Vorgang am Ende des Herstellungsverfahrens zur Herstellung des Identifikationslabels sowohl die Codierung der äußeren Identifikationslage als auch die Codierung der Transpondereinheit bzw. der Chipeinheit der Transpondereinheit in einem gemeinsamen Codierungsvorgang erfolgt. Hierdurch werden in besonders einfacher und ökonomischer Weise Identifikationslabels herstellbar, die sowohl die Erkennung der Identifikationsdaten über ein optisches Lesegerät - basierend auf der Codierung der äußeren Identifikationslage - als auch die Erkennung der gespeicherten Chipdaten über ein elektronisches Lesegerät ermöglichen. Derart beschaffene Identifikationslabels können also gleichermaßen im Zusammenwirken mit optischen oder elektronischen Leseeinrichtungen - je nach Ausrüstungsstandard - verwendet werden.

Nachfolgend wird eine Ausführungsform eines erfindungsgemäßen Identifikationslabels sowie eine Variante zur Herstellung des Identifikationslabels nach dem erfindungsgemäßen Verfahren unter Bezugnahme auf die Zeichnungen näher erläutert. Es zeigen:
- **Fig. 1**: eine Ausführungsform eines Identifikationslabels mit einer äußeren Identifikationslage und einer Transpondereinheit;
- **Fig. 2**: eine Teilschnittdarstellung des in **Fig. 1** dargestellten Identifikationslabels unter besonderer Darstellung einer Basiseinheit;
- **Fig. 3**: die in **Fig. 2** dargestellte Basiseinheit mit einer Permanentkleberschicht;
- **Fig. 4**: ein Identifikationslabel mit einer in einem herkömmlichen Lagenaufbau integrierten Transpondereinheit gemäß einer ersten Ausführungsform;
- **Fig. 5**: ein herkömmliches Identifikationslabel gemäß dem Stand der Technik;
- **Fig. 6**: ein weiteres Identifikationslabel mit geänderter Konfiguration der Transpondereinheit;
- **Fig. 7**: eine Basiseinheit mit einer zwischen zwei Adhäsionslagen angeordneten Verstärkungslage.

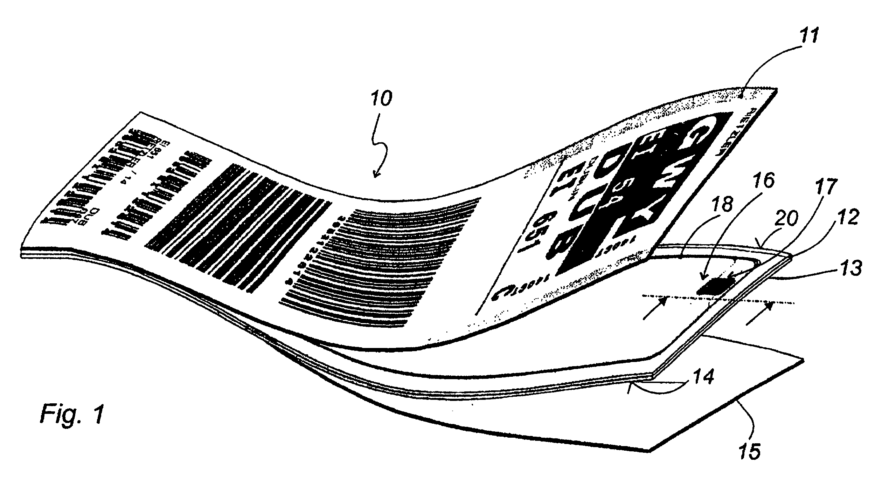

**Fig. 1** zeigt ein Identifikationslabel 10 mit einer äußeren Identifikationslage 11, die auf eine Verstärkungslage 12 zur mechanischen Stabilisierung der Identifikationslage 11 aufgebracht ist. Unterseitig auf der Verstärkungslage 12 befindet sich eine aus einer Haftkleberbeschichtung gebildete Adhäsionslage 13, die fest haftend mit der Unterseite der Verstärkungslage 12 verbunden ist. Die Adhäsionslage 13 weist eine Adhäsionsoberfläche 14 auf, die zur Passivierung, also zur Verhinderung einer Haftklebung mit einer Oberfläche mit einer Passivierungslage 15 versehen ist.

Zur besseren Darstellung der einzelnen Lage des Lagenaufbaus ist das in **Fig. 1** dargestellte Identifikationslabel 10 mit teilweise delaminierten, also voneinander teilflächig abgelösten einzelnen Lagen, also der Identifikationslage 11, der Verstärkungslage 12 mit der daran haftenden Adhäsionslage 13 und der Passierungslage 15, dargestellt.

Die linke Hälfte des in **Fig. 1** dargestellten Identifikationslabels 10 weist demhingegen einen geschlossenen Lagenverbund mit unmittelbar aufeinanderliegend angeordneten einzelnen Lagen auf, so wie es dem Ausgangszustand des Identifikationslabels 10 vor dem Ablösen der Passivierungslage 15 von der Adhäsionslage 13 zur Applikation auf einer hier nicht näher dargestellten Oberfläche eines zu kennzeichnenden Gegenstands entspricht.

Wie aus dem teilweise im delaminierten Zustand in **Fig. 1** dargestellten Lagenaufbau des Identifikationslabels 10 zu entnehmen ist, dient die Verstärkungslage 12 nicht nur zur mechanischen Stabilisierung des Identifikationslabels 10 bzw. der Identifikationslage 11, sondern gleichzeitig als Substrat zur Anordnung einer Transpondereinheit 16. Die Transpondereinheit 16 umfaßt im vorliegenden Fall eine hier als Chipmodul 17 ausgebildete Chipeinheit sowie eine mit dem Chipmodul 17 kontaktierte Antennenspule 18, die im vorliegenden Fall aus einem Kupferdraht hergestellt ist.

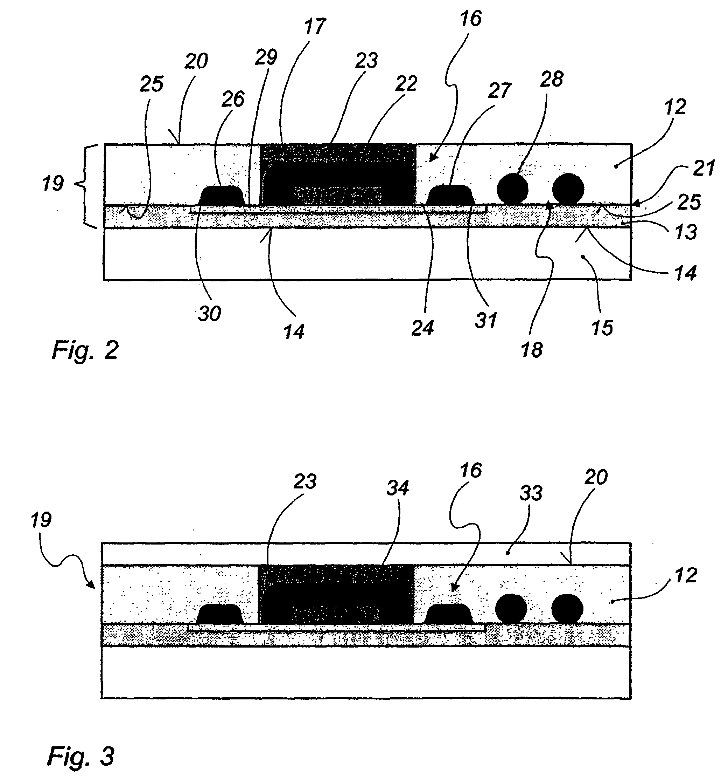

Zur besseren Darstellung der Anordnung der Tranpondereinheit 16 auf der als Substrat dienenden Verstärkungslage 12 ist in **Fig. 1** die Verstärkungslage 12 aus einem transparenten Material bestehend dargestellt. Zur ergänzenden Erläuterung der Anordnung der Transpondereinheit 16 auf der Verstärkungslage 12 zeigt **Fig. 2** eine vergrößerte Teilschnittdarstellung durch die Verstärkungslage 12, wobei sich in der Darstellung gemäß **Fig. 2** die Passivierungslage 15 in Adhäsionskontakt mit der auf der Unterseite der Verstärkungslage 12 ausgebildeten Adhäsionlage 13 befindet. Der in **Fig. 2** dargestellte Lagenverbund zwischen der Verstärkungslage 12 und der auf der Unterseite der Verstärkungslage 12 aufgebrachten Adhäsionslage 13 bildet eine Basiseinheit 19, die zur Ausbildung des in **Fig. 1** dargestellten Identifikationslabels 10 durch die Identifikationslage 11 ergänzt das Identifikationslabel 10 bildet. Dabei kann, wie im Fall des in **Fig. 1** dargestellten Identifikationslabels 10, bei Ausbildung der Identifikationslage 11 aus einem unmittelbar auflaminierbaren Material die Identifikationslage 11 zur Ausbildung des Identifikationslabels 10 unmittelbar, beispielsweise unter Einwirkung von Druck und Temperatur, auf eine obere Aufbauoberfläche 20 der Verstärkungslage 12 aufgebracht sein.

Die in **Fig. 2** dargestellte, aus einem Lagenverbund zwischen der Verstärkungslage 12 und der Adhäsionslage 13 gebildete Basis- und Befestigungseinheit 19 weist im Bereich einer zwischen der Verstärkungslage 12 und der Adhäsionslage 13 ausgebildeten Grenzschicht 21 die Transpondereinheit 16 auf. Zur versenkten Aufnahme des Chipmoduls 17 ist das Chipmodul 17 mit einem Chip bzw. den Chip aufnehmenden, fachsprachlich als "Mould" bezeichneten Formkörper 22 in eine Fensteröffnung 23 der Verstärkungslage 12 eingesetzt. Dabei dient ein Kontaktträger 24 des Chipmoduls 17 neben einer rückhaltenden Anlage des Chipmoduls 17 an einer Applikationsoberfläche 25 der Verstärkungslage 12 zur Kontaktierung mit freien Kontaktenden 26, 27 der aus Spulendraht 28 hergestellten Antennenspule 18. Wie ferner aus **Fig. 2** zu ersehen ist, ist die beispielsweise durch eine Verlegung auf der Applikationsoberfläche 25 der Verstärkungslage 12 erzeugte Antennenspule 18 in die Applikationsoberfläche 25 eingebettet angeordnet, so daß abgesehen von dem Kontaktträger 24 des Chipmoduls 17, der über auf seiner Kontaktseite 29 angeordnete Bumps 30, 31 mit den Kontaktenden 26, 27 kontaktiert ist, alle anderen Bereiche oder Teile der Transpondereinheit 16 im wesentlichen in der Verstärkungslage 12 angeordnet sind. Hieraus ergibt sich, daß bereits eine relativ dünnschichtige Ausbildung der auf die Applikationsoberfläche 25 der Verstärkungslage 12 aufgebrachten Adhäsionslage 13 ausreichend ist, um die Transpondereinheit 16 bzw. den Kontaktträger 24 des Chipmoduls 17 unter Ausbildung einer ebenen Adhäsionsfläche 14 der Adhäsionslage 13 vollständig abzudecken. Zur Passivierung der Adhäsionsfläche 14 der Adhäsionslage 13 dient im vorliegenden Fall ein Silikonpapier als Passivierungslage 15. Zur Aktivierung der Adhäsionsfläche 14 kann die Passivierungslage 15 einfach abgezogen werden.

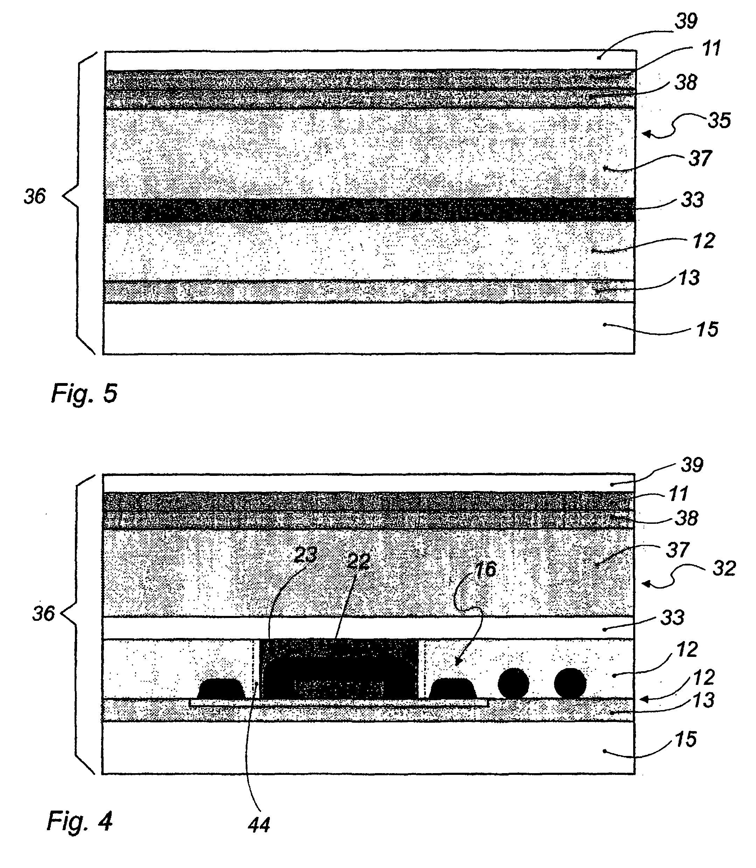

**Fig. 3** zeigt die Basiseinheit 19 zu Beginn eines Verfahrens zur Herstellung eines in **Fig. 4** ebenfalls in einer Teilschnittdarstellung dargestellten Identifikationslabels 32. Bei der Herstellung des Identifikationslabels 32 dient die in **Fig. 3** dargestellte Basiseinheit 19 als Halbzeug, also als bereits zuvor in einem unabhängigen Verfahren hergestelltes Zwischenprodukt, das bei der Herstellung des Identifikationslabels 32 als Einheit, also quasi als eine Lage des herzustellenden Gesamtlagenaufbaus, verwendet wird. Zur Erzeugung des in **Fig. 4** dargestellten, das Identifikationslabel 32 bildenden Gesamtlagenaufbaus 36 wird zunächst die Aufbauoberfläche 20 mit einer Permanentkleberschicht 33 versehen, die beispielsweise als Hotmelt-Schicht ausgebildet und in einem Rakelverfahren gleichmäßig über die Aufbauoberfläche 20 der Verstärkungslage 12 verteilt werden kann. Dabei wird der in der Fensteröffnung 23 nach Einsetzen des Chipmoduls 17 verbleibende Freiraum 34 zumindest teilweise mit dem Klebermaterial der Permanentkleberschicht 33 aufgefüllt.

Der weitere Lagenaufbau ist in **Fig. 4** dargestellt. Bei einem Vergleich mit dem in **Fig. 5** dargestellten Lagenaufbau eines dem Stand der Technik entsprechenden, konventionellen Identifikationslabels 35 fällt auf, daß im vorliegenden Fall der Lagenaufbau 36 des konventionellen Identifikationslabels 35, das lediglich mit einer äußeren Identifikationslage 11 versehen ist, identisch ist mit dem Lagenaufbau 36 der in **Fig. 4** dargestellten Ausführungsform des erfindungsgemäßen Identifikationslabels 32, das neben der äußeren Identifikationslage 11 mit der Transpondereinheit 16 versehen ist. Wie **Fig. 4** deutlich zeigt, befindet sich die Transpondereinheit 16 im wesentlichen in der Grenzschicht 21 zwischen der Verstärkungslage 12 und der Adhäsionslage 13 angeordnet, ohne daß hierdurch der Gesamtlagenaufbau 36 beeinflußt würde.

Bei den weiteren Lagen des Gesamtlagenaufbaus 36 handelt es sich aufbauend auf die Permanentkleberschicht 33 um eine Papierlage 37, eine Haftschicht 38 zur Herstellung einer haftenden Verbindung mit der im vorliegenden Fall beispielsweise als sogenannte "Thermoschicht" ausgebildeten Identifikationslage 11 und eine Siegelschicht 39, die als Oberflächenschutz für die Identifikationslage 11 dient.

Das in **Fig. 4** dargestellte Identifikationslabel 32 weist aufgrund des mit dem Gesamtlagenaufbau 36 eines herkömmlichen Identifikationslabels 35 übereinstimmenden Gesamtlagenaufbaus die vorteilhafte Möglichkeit auf, eine Kennzeichnung oder Codierung der äußeren Identifikationslage 11 nach Herstellung des Gesamtlagenaufbaus 36 in einem Thermobedrukkungsverfahren herstellen zu können. Ein wesentlicher Grund dafür ist, daß durch die Beibehaltung des gewohnten Gesamtlagenaufbaus 36 trotz der im Gesamtlagenaufbau 36 angeordneten Transpondereinheit 16 eine Gesamtdicke ermöglicht wird, die eine konventionelle Bedruckung des Identifikationslabels 32 im Thermobedruckungsverfahren komplikationslos ermöglicht.

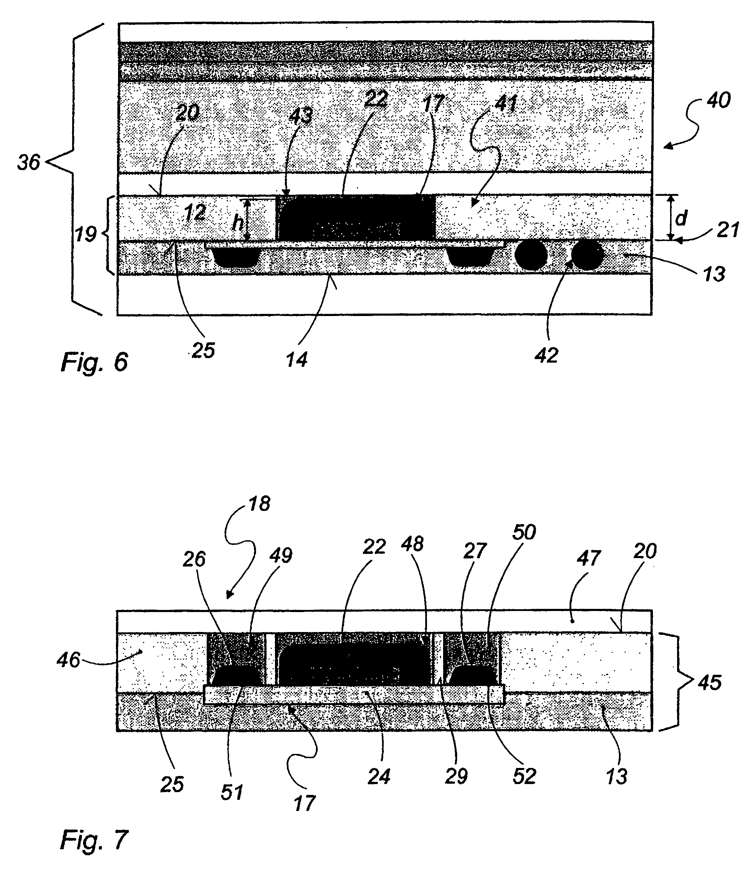

**Fig. 6** zeigt eine in der Art der Darstellung mit **Fig. 4** übereinstimmende Abbildung eines Identifikationslabels 40, das in seinem Gesamtlagenaufbau 36 übereinstimmend mit dem in **Fig. 4** dargestellten Identifikationslabel 32 ausgebildet ist. Im Unterschied zum Identifikationslabel 32 weist das Identifikationslabel 40 eine verändert konfigurierte Transpondereinheit 41 auf, wobei, wie aus einem Vergleich der **Fig. 4** und **6** ersichtlich, sich jedoch nach wie vor die Transpondereinheit 41 in der Grenzschicht 21 zwischen der Verstärkungslage 12 und der Adhäsionslage 13 befindet. Im Unterschied zum Identifikationslabel 32 befindet sich die Transpondereinheit 41 bzw. eine mit dem Chipmodul 17 der Transpondereinheit 41 kontaktierte Antennenspule 42 nicht in das Material der Verstärkungslage 12 eingebettet, sondern ist vielmehr auf der Applikationsoberfläche 25 der Verstärkungslage 12 angeordnet. Der Unterschied der Anordnung der Antennenspule 42 bei dem Identifikationslabel 40 gegenüber der Antennenspule 18 des Identifikationslabels 32 kann in der Art des verwendeten Verfahrens zur Applikation der Antennenspule 42 wie auch im Material der Verstärkungslage 12, das beispielsweise keine Einbettung ermöglicht, begründet sein. In jedem Fall wird jedoch die Antennenspule 42 durch die Adhäsionslage 13 unter Ausbildung einer ebenen Adhäsionsfläche 14 abgedeckt, so daß auch hier der Gesamtlagenaufbau 36, insbesondere der Lagenaufbau der Basiseinheit 19, erhalten bleibt.

Wie ferner aus **Fig. 6** ersichtlich, weist die Verstärkungslage 12 eine Fensteröffnung 43 auf, die an die benachbarten Konturen des Formkörpers 22 des Chipmoduls 17 angepaßt ist. Darüber hinaus ist im vorliegenden Fall der Formkörper 22 in seiner Höhe h der Dicke d der Verstärkungslage 12 angepaßt, so daß im vorliegenden Fall im wesentlichen kein Freiraum in der Fensteröffnung 43 verbleibt, und eine insgesamt im wesentlichen ebene Aufbauoberfläche 20 der Verstärkungslage 12 bzw. der Basiseinheit 19 die Folge ist.

Hinsichtlich der Materialwahl für die Verstärkungslage 12 hat sich besonders die Verwendung von Polypropylen als vorteilhaft erwiesen, da hier eine besonders leichte Einbettung der Antennenspule 18, wie in dem Ausführungsbeispiel des Identifikationslabels 32 in **Fig. 4** dargestellt, möglich ist. Wie **Fig. 6** bzw. die auf **Fig. 6** bezogenen Ausführungen deutlich machen, sind jedoch entsprechende Materialeigenschaften nicht notwendig, da ohne weiteres sogar eine eher oberflächige Applikation der Antennenspule 42 auf die Applikationsoberfläche 25 der Verstärkungslage 12 möglich ist, ohne daß hierdurch der Gesamtlagenaufbau 36 beeinflußt würde. Demzufolge sind für die Verstärkungslage 12 beliebige Materialien auswählbar, solange die ursprüngliche mechanisch stabilisierende Funktion der Verstärkungslage 12 erhalten bleibt.

Obwohl hier nicht im einzelnen dargestellt, ist es auch möglich, abweichend von den in den **Fig. 4** und **6** dargestellten Transpondereinheiten 16 bzw. 41, die jeweils ein Chipmodul 17 kontaktiert mit einer Antennenspule 18 bzw. 42 betreffen, Transpondereinheiten zu verwenden, bei denen die Antennenspule bzw. die Kontaktenden der Antennenspule unmittelbar mit dem Chip kontaktiert sind, beispielsweise dadurch, daß die Chipanschlußflächen direkt mit Bumps zur Kontaktierung mit den Kontaktenden der Antennenspule versehen werden. Bei einer derartigen Ausführung der Transpondereinheit entfällt somit der Kontaktträger 24 des Chipmoduls 17. Bei einer derartigen, durch direkte Verbindung des Chips mit der Antennenspule hergestellten Transpondereinheit kann es jedoch von Vorteil sein, eine gesonderte, den Chip peripher umgebende Versteifungseinrichtung vorzusehen, die schädliche mechanische Beanspruchungen bei Herstellung des Lagenaufbaus, beispielsweise im Laminierungsverfahren, vom Chip fernhalten. Derartige Versteifungseinrichtungen können jedoch genausogut bei Verwendung des in den **Fig. 4** und **6** beispielhaft dargestellten Chipmoduls 17 vorteilhaft sein, um den hier im Formkörper 22 angeordneten Chip zu schützen. **Fig. 4** zeigt mit strichpunktiertem Linienverlauf beispielhaft eine Möglichkeit einer Anordnung einer hier als ringförmige Stützhülse 44 ausgeführten Versteifungseinrichtung. Zur Installation der Stützhülse 44 wird diese vor dem Einsetzen des Formkörpers 22 des Chipmoduls 17 in die Fensteröffnung 23, wie in **Fig. 4** angedeutet, eingesetzt.

**Fig. 7** zeigt eine Basiseinheit 45 mit einer Verstärkungslage 46, die auf ihrer Aufbauoberfläche 20 im Unterschied zu der in **Fig. 3** dargestellten Basiseinheit 19, die mit der Permanentkleberschicht 33 versehen ist, eine zweite Adhäsionslage 47 aufweist, die in ihrer Beschaffenheit identisch mit der Adhäsonsfläche 13 sein kann und wie die Adhäsionsfläche 13 aus einer Haftkleberschicht gebildet ist.

Wie **Fig. 7** ferner zeigt, weist die Verstärkungslage 46 neben einer Fensteröffnung 48 zur Aufnahme des den Chip umgebenden Formkörpers 22 des Chipmoduls 17 zwei weitere Fensteröffnungen 49 ,50 auf, die beim Aufbau der Basiseinheit 45 einen Kontaktierungszugriff auf die Kontaktenden 26, 27 der eingebettet in der Verstärkungslage 46 angeordneten Antennenspule 18 ermöglichen. Hierzu wird nach Einbettung der Antennenspule 18 und vor Aufbringung der Adhäsionslagen 13, 47 auf die Verstärkungslage 46 das Chipmodul 17 bei gleichzeitiger Aufnahme des Formkörpers 22 in der Fensteröffnung 48 auf die Applikationsoberfläche 25 der Verstärkungslage 46 aufgebracht. Durch die Fensteröffnungen 49, 50 sind die Kontaktenden 26, 27 der Antennenspule 18 im Bereich von Kontaktflächen 51, 52 auf der Kontaktseite 29 des Kontaktträgers 24 des Chipmoduls 17 zugänglich, so daß mit einem geeigneten, hier nicht näher dargestellten Bondwerkzeug eine Kontaktierung der Kontaktenden 26, 27 mit den Kontaktflächen 51, 52 von der Aufbauoberfläche 20 der Verstärkungslage 46 her möglich ist. Anschließend werden auf die Aufbauoberfläche 20 und die Applikationsoberfläche 25 der Verstärkungslage 46 die Adhäsionslagen 13 und 47 aufgebracht. Dabei kann das zum Aufbau der Adhäsionslagen 13, 47 verwendete Haftklebermaterial zum Ausgleich von Unebenheiten und zum zumindest teilweisen Auffüllen von Hohlräumen genutzt werden.

Die in **Fig. 7** dargestellte, mit der weiteren Adhäsionslage 47 versehene Basiseinheit 45 kann durch Aufbringen von hier nicht näher dargestellten Passivierungslagen auf einfachste Art und Weise in ein "transponder tag" umgewandelt werden, das auch eine Anbringung an Gegenständen mit Befestigungsmitteln, wie Bändern oder dergleichen, ermöglicht.

## Patentansprüche

1. Identifikationslabel mit Transpondereinheit zur Oberflächenbefestigung auf oder zur Umbefestigung an einem Gegenstand, aufweisend einen mehrschichtigen Lagenaufbau mit einer Identifikationslage zur optischen Kennzeichnung, einer Verstärkungslage zur mechanischen Stabilisierung der Identifikationslage und einer Adhäsionslage zur Befestigung des Identifikationslabels am Gegenstand,
**dadurch gekennzeichnet,**
**daß** die Verstärkungslage (12, 46) als Substrat zur Anordnung der Transpondereinheit (16, 41) dient.

2. Identifikationslabel nach Anspruch 1,
**dadurch gekennzeichnet,**
**daß** die Transpondereinheit (16, 41) sich in einer zwischen der Verstärkungslage (12, 46) und der Adhäsionslage (13) ausgebildeten Grenzschicht (21) erstreckt.

3. Identifikationslabel nach Anspruch 1 oder 2,
**dadurch gekennzeichnet,**
**daß** die Adhäsionslage (13) mit einer Passivierungslage (15) abgedeckt und die Verstärkungslage (12, 46) mit einer Befestigungseinrichtung zur Befestigung des Identifikationslabels am Gegenstand versehen ist.

4. Basiseinheit als Halbzeug zur Herstellung eines Identifikationslabels mit Transpondereinheit zur Oberflächenbefestigung auf oder zur Umbefestigung an einem Gegenstand, umfassend eine Verstärkungslage und eine Adhäsionslage,
**dadurch gekennzeichnet,**
**daß** die Verstärkungslage (12, 46) als Substrat zur Anordnung der Transpondereinheit (16, 41) in einer zwischen der Verstärkungslage (12, 46) und der Adhäsionslage (13) ausgebildeten Grenzschicht (21) dient.

5. Basiseinheit nach Anspruch 4,
**dadurch gekennzeichnet,**
**daß** die Verstärkungslage (12, 46) mit einer Fensteröffnung (23, 43, 48) für die zumindest anteilige Aufnahme einer Chipeinheit (17) versehen ist, und die Chipeinheit zur Ausbildung der Transpondereinheit (16, 41) mit einer Antennenspule (18, 42) aus Draht (28) kontaktiert ist.

6. Basiseinheit nach Anspruch 5,
**dadurch gekennzeichnet,**
**daß** die Verstärkungslage (12) mit weiteren Fensteröffnungen (49, 50) zum Zugriff auf Kontaktbereiche (51, 52) der Chipeinheit (17) versehen ist.

7. Basiseinheit nach Anspruch 5 oder 6,
**dadurch gekennzeichnet,**
**daß** die Chipeinheit (17) zumindest teilweise von einer die Chipeinheit umgebenden, sich in der Ebene der Verstärkungslage (12, 46) erstreckenden Versteifungseinrichtung (44) umgeben ist.

8. Basiseinheit nach einem oder mehreren der Ansprüche 5 bis 7,
**dadurch gekennzeichnet,**
**daß** die Antennenspule (41) auf der Verstärkungslage (12) angeordnet und durch die Adhäsionslage (13) unter Ausbildung einer ebenen Adhäsionsfläche (14) abgedeckt ist.

9. Basiseinheit nach einem oder mehreren der Ansprüche 5 bis 7,
**dadurch gekennzeichnet,**
**daß** die Antennenspule (18) zumindest anteilig in die Verstärkungslage (12, 46) eingebettet und durch die Adhäsionslage (13, 47) unter Ausbildung einer ebenen Adhäsionsfläche (14) abgedeckt ist.

10. Basiseinheit nach einem oder mehreren der Ansprüche 4 bis 9,
**dadurch gekennzeichnet,**
**daß** die Adhäsionsfläche (14) der Adhäsionslage (13, 47) mit einer Passivierungslage (15) abgedeckt ist.

11. Basiseinheit nach Anspruch 10,
**dadurch gekennzeichnet,**
**daß** die Passivierungslage durch die freie Oberfläche der Verstärkungslage (12, 46) einer weiteren Basiseinheit (19) gebildet ist.

12. Verfahren zur Herstellung eines Identifikationlabels nach einem oder mehreren der Ansprüche 1 bis 3,
**gekennzeichnet durch**
- die Bereitstellung einer Basiseinheit (19) nach einem oder mehreren der Ansprüche 4 bis 11 und
- die Aufbringung einer Identifikationslage (11) auf die Basiseinheit (19).

13. Verfahren nach Anspruch 12,
**dadurch gekennzeichnet,**
**daß** vor Aufbringung der Identifikationslage (11) zur Ausbildung einer Zwischenlage eine Trägerlage (37) auf die Basiseinheit (19, 45) aufgebracht wird.

14. Verfahren nach Anspruch 12 oder 13,
**dadurch gekennzeichnet,**
**daß** zur Befestigung zwischen der Basiseinheit (19) und der Identifikationslage (11) oder der Trägerlage (37) eine Permanentkleberschicht (33) auf die Basiseinheit (19), die Identifikationslage (11) oder die Trägerlage (37) aufgebracht wird.

15. Verfahren nach Anspruch 12 oder 13,
**dadurch gekennzeichnet,**
**daß** zur Befestigung zwischen der Basiseinheit (45) und der Identifikationslage (11) oder der Trägerlage (37) eine weitere Adhäsionslage (47) auf die Basiseinheit (45), die Identifikationslage (11) oder die Trägerlage (37) aufgebracht wird.

16. Verfahren nach einem oder mehreren der Ansprüche 12 bis 15,
**dadurch gekennzeichnet,**
**daß** die Codierung der Identifikationslage (11) und die Codierung der Transpondereinheit (16, 41) in einem gemeinsamen Codierungsvorgang erfolgt.

## Claims

1. An identification label with a transponder unit for surface mounting on or mounting around an object provided with a multilayered layer structure with an identification layer for optical marking, a reinforcement layer for mechanical stabilization of the identification layer, and an adhesion layer for mounting the identification label on the object, **characterized in that** the reinforcement layer (12, 46) serves as a substrate for arranging the transponder unit (16, 41).

2. An identification label according to claim 1, **characterized in that** the transponder unit (16, 41) extends in a boundary layer (21) formed between the reinforcement layer (12, 46) and the adhesion layer (13).

3. An identification label according to claim 1 or 2, **characterized in that** the adhesion layer (13) is covered with a deadening layer (15) and the reinforcement layer (12, 46) is provided with a reinforcement device for mounting the identification label onto the object.

4. A base unit as a semi-finished product for producing an identification label with a transponder unit for surface mounting on or for mounting around an object, including a reinforcement layer and an adhesion layer, **characterized in that** the reinforcement layer (12, 46) serves as a substrate for arranging the transponder unit (16, 41) in a boundary layer (21) formed between the reinforcement layer (12, 46) and the adhesion layer (13).

5. A base unit according to claim 4, **characterized in that** the reinforcement layer (12, 46) is provided with a window opening (23, 43, 48) for at least proportionally accepting a chip unit (17) and the chip unit contacts an antenna coil (18, 42) made of wire (28) for forming the transponder unit (16, 41).

6. A base unit according to claim 5, **characterized in that** the reinforcement layer (12) is provided with additional window openings (49, 50) for accessing the contact regions (51, 52) of the chip unit (17).

7. A base unit according to claim 5 or 6, **characterized in that** the chip unit (17) is at least partially surrounded by a reinforcement device (44) surrounding the chip unit and extending in the plane of the reinforcement layer (12, 46).

8. A base unit according to one or more of the claims 5 through 7, **characterized in that** the antenna coil (41) is positioned on the reinforcement layer (12) and is covered by the adhesion layer (13), forming a plane adhesion surface (14).

9. A base unit according to one or more of the claims 5 through 7, **characterized in that** the antenna coil (18) is at least proportionally embedded in the reinforcement layer (12, 46) and is covered by the adhesion layer (13, 47), forming a plane adhesion surface (14).

10. A base unit according to one or more of the claims 4 through 9, **characterized in that** the adhesion surface (14) of the adhesion layer (13, 47) is covered by a deadening layer (15).

11. A base unit according to claim 10, **characterized in that** the deadening layer is embodied by the clear surface of the reinforcement layer (12, 46) of an additional base unit (19).

12. A process for producing an identification label according to one or more of the claims 1 through 3, **characterized in that**
- a base unit (19) according to one or more of the claims 4 through 11 is provided and
- an identification layer (11) is applied onto the base unit (19).

13. A process according to claim 12, **characterized in that** a carrier layer (37) is applied onto the base unit (19, 45) prior to applying the identification layer (11) for forming an intermediate layer.

14. A process according to claim 12 or 13, **characterized in that** a permanent adhesion layer (33) is applied onto the base unit (19), the identification layer (11), or the carrier layer (37) in order to be mounted between the base unit (19) and the identification layer (11) or the carrier layer (37).

15. A process according to claim 12 or 13, **characterized in that** an additional adhesion layer (47) is applied onto the base unit (45), the identification layer (11), or the carrier layer (37) in order to be mounted between the base unit (45) and the identification layer (11) or the carrier layer (37).

16. A process according to one or more of the claims 12 through 15, **characterized in that** the coding of the identification layer (11) and the coding of the transponder unit (16, 41) occur in a common coding process.

## Revendications

1. Etiquette d'identification avec une unité émettrice-réceptrice prévue pour la fixation en surface sur, ou la fixation autour d'un objet, présentant une structure en stratifié multicouche avec une couche d'identification pour l'identification optique, une couche de renforcement pour la stabilisation mécanique de la couche d'identification et une couche d'adhésion pour la fixation de l'étiquette d'identification sur l'objet,
**caractérisée en ce que**
la couche de renforcement (12, 46) sert de substrat pour l'agencement de l'unité émettrice-réceptrice (16, 41).

2. Etiquette d'identification selon la revendication 1, **caractérisée en ce que** l'unité émettrice-réceptrice (16, 41) s'étend dans une couche limite (21) réalisée entre la couche de renforcement (12, 46) et la couche d'adhésion (13).

3. Etiquette d'identification selon la revendication 1 ou 2, **caractérisée en ce que** la couche d'adhésion (13) est couverte d'une couche de passivation (15) et la couche de renforcement (12, 46) est munie d'un dispositif de fixation pour fixer l'étiquette d'identification sur l'objet.

4. Unité de base se présentant sous forme de produit semi-fini pour la fabrication d'une étiquette d'identification munie d'une unité émettrice-réceptrice prévue pour la fixation en surface sur, ou bien pour la fixation autour d'un objet, comprenant une couche de renforcement et une couche d'adhésion, **caractérisée en ce que** la couche de renforcement (12, 46) sert de substrat pour l'agencement de l'unité émettrice-réceptrice (16, 41) dans une couche limite (21) réalisée entre la couche de renforcement (12, 46) et la couche d'adhésion (13).

5. Unité de base selon la revendication 4, **caractérisée en ce que** la couche de renforcement (12, 46) est munie d'une ouverture de fenêtre (23, 43, 48) pour loger au moins partiellement une unité à puce électronique (17), et l'unité à puce électronique est mise en contact avec une bobine d'antenne (18, 42) réalisée en fil métallique (28), pour former l'unité émettrice-réceptrice (16, 41).

6. Unité de base selon la revendication 5, **caractérisée en ce que** la couche de renforcement (12) est munie d'une pluralité d'ouvertures de fenêtre (49, 50) pour permettre l'accès à des zones de contact (51, 52) de l'unité à puce électronique (17).

7. Unité de base selon la revendication 5 ou 6, **caractérisée en ce que** l'unité à puce électronique (17) est entourée, au moins partiellement, par un dispositif de rigidification (44) entourant l'unité à puce électronique, s'étendant dans le plan de la couche de renforcement (12, 46).

8. Unité de base selon l'une ou plusieurs des revendications 5 à 7, **caractérisée en ce que** la bobine d'antenne (41) est disposée sur la couche de renforcement (12) et est couverte par la couche d'adhésion (13) en formant une couche d'adhésion (14) plane.

9. Unité de base selon l'une ou plusieurs des revendications 5 à 7, **caractérisée en ce que** la bobine d'antenne (18) est noyée au moins partiellement dans la couche de renforcement (12, 46) et est couverte par la couche d'adhésion (13, 47) en formant une surface d'adhésion (14) plane.

10. Unité de base selon l'une ou plusieurs des revendications 4 à 9, **caractérisée en ce que** la surface d'adhésion (14) de la couche d'adhésion (13, 47) est couverte d'une couche de passivation (15).

11. Unité de base selon la revendication 10, **caractérisée en ce que** la couche de passivation est formée par la surface libre de la couche de renforcement (12, 46) d'une autre unité de base (19).

12. Procédé de fabrication d'une étiquette d'identification selon l'une ou plusieurs des revendications 1 à 3, **caractérisé par**
- la préparation d'une unité de base (19) selon l'une ou plusieurs des revendications 4 à 11, et
- l'application d'une couche d'identification (11) sur l'unité de base (19).

13. Procédé selon la revendication 12, **caractérisé en ce que**, avant application de la couche d'identification (11), pour former une couche intermédiaire, une couche support (37) est appliquée sur l'unité de base (19, 45).

14. Procédé selon la revendication 12 ou 13, **caractérisé en ce que**, pour assurer la fixation entre l'unité de base (19) et la couche d'identification (11) ou la couche support (37), une couche d'adhésif permanent (33) est appliquée sur l'unité de base (19), la couche d'identification (11) ou la couche support (37).

15. Procédé selon la revendication 12 ou 13, **caractérisé en ce que**, pour assurer la fixation entre l'unité de base (45) et la couche d'identification (11) ou la couche support (37), une autre couche d'adhésion (47) est appliquée sur l'unité de base (45), la couche d'identification (11) ou la couche support (37).

16. Procédé selon l'une ou plusieurs des revendications 12 à 15, **caractérisé en ce que** le codage de la couche d'identification (11) et le codage de l'unité émettrice-réceptrice (16, 41) se font d'après un processus de codage commun.
